# EUROPÄISCHE PATENTSCHRIFT

(11) **EP 2 507 588 B1**
(45) Veröffentlichungstag und Bekanntmachung des Hinweises auf die Patenterteilung: **23.03.2016**
(21) Anmeldenummer: 10773034.3
(22) Anmeldetag: 22.10.2010
(51) Int. Cl.: G01C 21/34, B60W 20/00

(54) **VERFAHREN UND STEUERGERÄT ZUR STEUERUNG EINES HYBRIDANTRIEBS EINES FAHRZEUGS**
METHOD AND CONTROL DEVICE FOR CONTROLLING A HYBRID DRIVE OF A VEHICLE
PROCÉDÉ ET BOÎTIER DE COMMANDE POUR LA COMMANDE DE L'ENTRAÎNEMENT HYBRIDE D'UN VÉHICULE

(30) Priorität: 02.12.2009 DE 102009047395
(43) Veröffentlichungstag der Anmeldung: 10.10.2012
(73) Patentinhaber: Robert Bosch GmbH, 70442 Stuttgart (DE)
(72) Erfinder: KLEINE-BESTEN, Thomas, 38116 Braunschweig (DE); GERCKE, Jobst, 31171 Nordstemmen (DE)
(86) Internationale Anmeldenummer: PCT/EP2010/065935
(87) Internationale Veröffentlichungsnummer: WO 2011/067033

(56) Entgegenhaltungen:
- EP-A2- 1 297 982
- WO-A1-2008/148606
- WO-A1-2009/006983
- DE-A1- 19 807 291
- DE-A1-102005 047 333
- US-A- 5 815 824
- US-B1- 6 314 347

## Beschreibung

### Stand der Technik

Die vorliegende Erfindung bezieht sich auf ein Verfahren zur Steuerung eines Hybridantriebs eines Fahrzeugs, auf ein entsprechendes Steuergerät sowie auf ein entsprechendes Computerprogrammprodukt und ein System zur Steuerung von Hybridantrieben einer Mehrzahl von Fahrzeugen.

Die Nutzung von Hybridantrieben in Fahrzeugen gewinnt zunehmend an Bedeutung, da diese Fahrzeuge den Kraftstoffverbrauch reduzieren können. Die Druckschrift EP 1 256 476 A2 beschreibt ein Verfahren, das eine komplexe Steuerung des Hybridantriebes vornimmt (Energierückgewinnung etc.), und dabei auf Informationen der Routenführung durch die Navigation zugreift. Die Druckschrift EP 1 842 758 A1 beschreibt ein Verfahren, dass eine Routenführung vorgibt, um damit eine möglichst große Energierückgewinnung für den Hybridantrieb zu erhalten.

Die WO 2008/148606 A1 beschreibt ein Hybridfahrzeug mit einem ersten Betriebsmodus für den Betrieb mit einem Verbrennungsmotor und einem zweiten Betriebsmodus für den Betrieb mit einem Elektromotor. Bei Einfahrt des Kraftfahrzeugs in eine Zone, deren schadstoffklassenabhängige Durchfahrtsbeschränkung einen Betrieb des Kraftfahrzeuges im ersten Betriebsmodus nicht vorsieht, wird ein Steuerbefehl für die Antriebstechnik des Kraftfahrzeuges zur Umschaltung auf den zweiten Betriebsmodus ausgegeben.

Die US 6,314,347 B1 zeigt ein Steuergerät für ein Hybridfahrzeug. Das Steuergerät ist ausgebildet, um je nach Streckenabschnitt, Streckenbeschaffenheit und Fahrzeuggeschwindigkeit entweder einen Elektromotor oder einen Verbrennungsmotor des Hybridfahrzeugs als Antriebsaggregat zu wählen. Somit kann das Hybridfahrzeug möglichst effizient fortbewegt werden.

### Offenbarung der Erfindung

Vor diesem Hintergrund wird mit der vorliegenden Erfindung ein Verfahren zur Steuerung eines Hybridantriebs eines Fahrzeugs, weiterhin ein Steuergerät, das diese Verfahren verwendet sowie ein entsprechendes Computerprogrammprodukt und schließlich ein System zur Steuerung von Hybridantrieben einer Mehrzahl von Fahrzeugen gemäß den unabhängigen Patentansprüchen vorgestellt. Vorteilhafte Ausgestaltungen ergeben sich aus den jeweiligen Unteransprüchen und der nachfolgenden Beschreibung.

Kern der vorliegenden Erfindung ist die Einführung eines einfachen (Routen-) Kriteriums für die Nutzung eines Hybridantriebes eines Fahrzeugs. Mit dem Routenkriterium kann vorgegeben werden, wann der Elektro- und wann der Kraftstoffantrieb des Hybridantriebs genutzt werden soll. Dieses Kriterium richtet sich danach, wann der Elektro- und wann der Kraftstoffantrieb effizienter genutzt werden kann. Erfindungsgemäß kann eine einfache Steuerung des Hybridantriebes realisiert werden. Dabei wird eine Reduktion der Komplexität angestrebt. Dazu wird das neue Routenkriterium genutzt, das die Effizienz des Einsatzes einer Art des Hybridantriebes bewertet. Dieses Kriterium kann dynamisiert und über einen Server verwaltet werden.

Das Routenkriterium kann dynamisch gestaltet werden. Damit kann eine Anpassung an die Verkehrssituation vorgenommen werden. Dabei können die Daten für das Routenkriterium von den Kraftfahrzeugen erfasst werden, die die jeweilige Strecke befahren. Die Kraftfahrzeuge können die erfassten Daten zu einem Server übermitteln, der die Daten wieder an andere Fahrzeuge weiter verteilt.

Ferner kann erfindungsgemäß eine Planung über die Gesamtstrecke einer abzufahrenden Route durchgeführt werden, um möglichst mit den vorhandenen Energie-Ressourcen das Ziel zu erreichen und/oder einen Zwischenstopp (Tankstelle) anhand der bekannten Informationen effizient zu planen.

Die vorliegende Erfindung schafft ein Verfahren zur Steuerung eines Hybridantriebs eines Fahrzeugs, wobei der Hybridantrieb einen Elektroantrieb und einen Kraftstoffantrieb aufweist, und das die folgenden Schritte umfasst: Bereitstellen einer Datenbasis, die Zuordnungen zwischen Routeninformationen und ersten und zweiten Routenkriterien aufweist, wobei die Routeninformationen von dem Fahrzeug befahrbare Routen repräsentieren und das erste Routenkriterium einen bevorzugten Einsatz des Elektroantriebs auf der jeweils zugeordneten Route und das zweite Routenkriterium einen bevorzugten Einsatz des Kraftstoffantriebs auf der jeweils zugeordneten Route darstellt; Empfangen einer aktuellen Routeninformation über eine Schnittstelle, wobei die aktuelle Routeninformation eine von dem Fahrzeug befahrene oder zu befahrene Route repräsentiert; Bestimmen eines der aktuellen Routeninformation zugeordneten aktuellen Routenkriteriums basierend auf der Datenbasis; und Bereitstellen einer Steuerinformation zum Einsetzen des Elektroantriebs, wenn es sich bei dem aktuellen Routenkriterium um das erste Routenkriterium handelt oder zum Einsetzen des Kraftstoffantriebs, wenn es sich bei dem aktuellen Röutenkriterium um das zweite Routenkriterium handelt.

Das erfindungsgemäße Verfahren kann beispielsweise von einem Navigationssystem des Fahrzeugs ausgeführt werden. Die Datenbasis kann ein Kartenmaterial für das Navigationssystem darstellen oder mit einem entsprechenden Kartenmaterial verknüpft sein. Jede Route kann einen richtungsbezogenen Abschnitt einer Straße repräsentieren, die von dem Fahrzeug befahren werden kann. Jeder in der Datenbasis enthaltenen Routeninformation kann das erste oder das zweite Routenkriterium zugeordnet sein. Die Routenkriterien repräsentieren somit Attribute, die den einzelnen Routenabschnitten zugewiesen sind, um sie in Bezug auf eine effiziente Nutzung des Hybridantriebs zu klassifizieren. Dabei kann allen oder nur ausgewählten Routeninformationen der Datenbasis ein entsprechendes Routenkriterium zugeordnet sein. Ist einer Routeninformation das erste Routenkriterium zugeordnet, so ist die entsprechende Route so eigestüft, dass es effizienter ist, die Route im Elektroantrieb zu befahren anstatt im Kraftstoffbetrieb. Ist einer Routeninformation das zweite Routenkriterium zugeordnet, so ist die entsprechende Route so eigestuft dass es effizienter ist, die Route im Kraftstoffbetrieb zu befahren anstatt im Elektroantrieb. Die Datenbasis kann bereits vor Ausführung des erfindungsgemäßen Verfahrens in einer Speichereinrichtung gespeichert worden sein, so dass bei der Ausführung des erfindungsgemäßen Verfahrens auf bereits bestehende und aufbereitete Daten zugegriffen werden kann. Dies bedeutet, dass eine Klassifizierung der Routen hinsichtlich der Nutzung des Hybridantriebs, eine Entscheidung für jeweils das erste oder zweite Routenkriterium sowie die Zuordnung des entsprechenden Routenkriteriums zur entsprechenden Route bereits vor Ausführung des erfindungsgemäßen Verfahrens durchgeführt werden kann. Die aktuelle Routeninformation kann von einem Navigationssystem bereitgestellt werden und eine Information über einen aktuellen Ort und eine aktuelle Fahrrichtung des Fahrzeugs umfassen. Mittels eines geeigneten Kartenmaterials kann aus dem Ort und der Fahrtrichtung die Straße oder Route bestimmt werden, die von dem Fahrzeug aktuell befahren wird. Basierend auf der Datenbasis kann für diese Route das zugeordnete Routenkriterium ermittelt werden. Dazu braucht lediglich das der Route zugeordnete Routenkriterium ausgelesen werden. Eine weitere Beurteilung des Routenkriteriums oder weiterer Routeneigenschaften ist nicht erforderlich. Die Steuerinformation kann geeignet sein, um den Hybridantrieb direkt anzusteuern, um vom Elektroantrieb auf den Kraftstoffantrieb, oder umgekehrt umzuschalten. Alternativ kann die Steuerinformation als eine von mehreren Entscheidungsgrundlagen dienen, basierend auf denen eine Steuerung des Hybridantriebs erfolgt.

Das erfindungsgemäße Verfahren umfasst einen Schritt des Empfangens einer Aktualisierungsinformation über eine Aktualisierungsschnittstelle. Die Aktualisierungsinformation weist zumindest für eine Routeninformation der Datenbasis ein aktualisiertes Routenkriterium auf, bei dem es sich entweder um das erste oder das zweite Routenkriterium handelt. In einem Schritt des Aktualisierens wird die Datenbasis basierend auf der Aktualisierungsinformation aktualisiert. Somit kann eine Route dynamisch, beispielsweise von Elektroantrieb zu Kraftstoffantrieb, umklassifiziert werden. Die Aktualisierungsschnittstelle kann mit einer Empfangseinrichtung des Fahrzeugs oder eines Steuergeräts zum Ausführen des erfindungsgemäßen Verfahrens gekoppelt sein, so dass die Aktualisierungsinformation drahtlos von einer fahrzeugexternen Sendeeinrichtung aus übermittelt werden kann.

Somit repräsentiert die Aktualisierungsinformation eine Information, die von einer zentralen Aktualisierungsvorrichtung oder einem weiteren Fahrzeug an eine Mehrzahl von Fahrzeugen bereitgestellt wird. Die zentrale Aktualisierungsvorrichtung kann als Server ausgebildet sein. In der zentralen Aktualisierungsvorrichtung können routenspezifische Daten gesammelt und ausgewertet werden, um zu überprüfen ob eine Änderung eines Routenkriteriums erforderlich oder sinnvoll ist. Auch kann einer Route, der bisher noch kein Routenkriterium zugewiesen ist, ein entsprechendes Routenkriterium zugewiesen werden. Entsprechende geänderte oder neue Routenkriterien können über die Aktualisierungsinformation übermittelt werden, um die eingesetzten Datenbasen mit den geänderten oder neuen Routenkriterien zu aktualisieren.

Erfindungsgemäß kann die Datenbasis eine digitale Karte eines Navigationssystems repräsentieren. In einer solchen Karte sind die befahrbaren Routen bereits vorhanden, so dass lediglich Verknüpfungen mit den Routenkriterien erforderlich sind. Neben den erfindungsgemäßen Routenkriterien können den einzelnen Routen auch weitere Routenoptionen zugewiesen sein, die beispielsweise die Länge oder die mögliche Fahrgeschwindigkeit auf den Routen betreffen.

Das erfindungsgemäße Verfahren kann eine Schritt des Bewertens eines aktuellen Bewegungsprofils des Fahrzeugs umfassen, um ein neues Routenkriterium für eine von dem Fahrzeug befahrene aktuelle Route zu bestimmen. Das neue Routenkriterium kann dem ersten Routenkriterium entsprechen wenn die befahrene aktuelle Route basierend auf dem Bewegungsprofil so eingestuft wird, das sie für den Einsatz des Elektroantriebs geeignet ist. Alternativ kann das neue Routenkriterium dem zweiten Routenkriterium entsprechen, wenn die befahrene aktuelle Route basierend auf dem Bewegungsprofil so eingestuft wird, das sie für den Einsatz des Kraftstoffantriebs geeignet ist. Das neue Routenkriterium kann als Grundlage für ein dynamisches Aktualisieren der bestehenden Routenkriterien dienen. Insbesondere kann das, der befahrenen aktuellen Route, zugeordnete bestehende Routenkriterium durch das neue Routenkriterium ersetzt werden. Das neue Routenkriterium kann zur Aktualisierung der eigenen Datenbasis eingesetzt werden. Auch kann das neue Routenkriterium genutzt werden, um die Datenbasen nachfolgender Fahrzeuge zu aktualisieren.

Beispielsweise kann eine Anzahl von Start- und Stop-Vorgängen, Beschleunigungs- und Bremsvorgänge und/oder ein Durchschnittsverbrauch des Fahrzeugs auf der aktuellen Route bewertet werden, um das neue Routenkriterium zu bestimmen.

In einem Schritt des Bereitstellens kann das neue Routenkriterium an eine Sendeschnittstelle bereitgestellt werden, so dass das neue Routenkriterium von der zentralen Aktualisierungsvorrichtung als Grundlage für die Aktualisierungsinformation und/oder von anderen Fahrzeugen als Aktualisierungsinformation empfangen werden kann. Somit ist eine fortlaufende Optimierung der Routenkriterien möglich.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach der vorstehend beschriebenen Ausführungsform verwendet wird, wenn das Programm auf einem Steuergerät ausgeführt wird.

Die vorliegende Erfindung schafft ferner ein System zur Steuerung von Hybridantrieben einer Mehrzahl von Fahrzeugen, wobei die Hybridantriebe einen Elektroantrieb und einen Kraftstoffantrieb aufweisen, mit folgenden Merkmalen: die Mehrzahl von Fahrzeugen, wobei jedes der Fahrzeuge ein erfindungsgemäßes Steuergerät aufweist; und mindestens einer zentralen Aktualisierungsvorrichtung, die ausgebildet ist, um Aktualisierungsinformationen an die Mehrzahl von Fahrzeugen auszusenden, wobei die Aktualisierungsinformationen zumindest für eine Routeninformation der Datenbasen der Steuergeräte ein aktualisiertes Routenkriterium aufweisen, bei dem es sich entweder um das erste oder das zweite Routenkriterium handelt.

Die Erfindung wird nachstehend anhand der beigefügten Zeichnungen beispielhaft näher erläutert. Es zeigen:
- Fig. 1: ein Blockschaltbild eines Systems zur Steuerung von Hybridantrieben einer Mehrzahl von Fahrzeugen, gemäß einem Ausführungsbeispiel der vorliegenden Erfindung;
- Fig. 2: ein Ablaufdiagramm eines Verfahrens zur Steuerung eines Hybridantriebs eines Fahrzeugs, gemäß einem Ausführungsbeispiel der vorliegenden Erfindung; und
- Fig. 3: ein Ablaufdiagramm eines Verfahrens zur Routenberechnung durch ein Navigationssystem, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

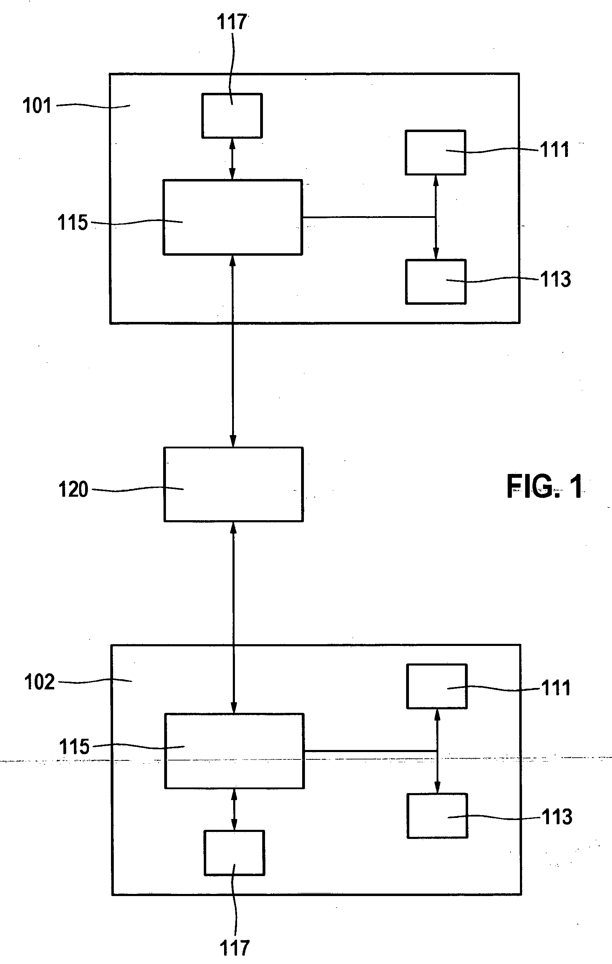

Fig. 1 zeigt ein Blockschaltbild eines Systems zur Steuerung von Hybridantrieben einer Mehrzahl von Fahrzeugen; gemäß einem Ausführungsbeispiel der vorliegenden Erfindung. Gezeigt sind zwei Fahrzeuge 101, 102, die jeweils einen Hybridantrieb aufweisen. Die Hybridantriebe weisen jeweils einen Elektroantrieb 111 und einen Kraftstoffantrieb 113, beispielsweise einen Verbrennungsmotor, auf. Ferner weisen die Fahrzeuge 101, 102 jeweils ein Steuergerät 115 und eine Datenbasis 117 auf. Das Steuergerät 115 kann ausgebildet sein, um Daten aus der Datenbasis 117 auszulesen. Beispielsweise kann die Datenbasis 117 als Nachschlagetabelle realisiert sein, wobei in einer Spalte Routenabschnitte und in einer weiteren Spalte jeweils Routenkriterien eingetragen sind, so dass jedem Routenabschnitt ein Routenkriterium zugeordnet ist. Die Routenkriterium können definieren, ob für den zugeordneten Routenabschnitt ein Antrieb des Fahrzeugs 101, 102 durch den Elektroantrieb 111 oder durch den Kraftstoffantrieb 113 vorteilhaft ist. Beispielsweise kann das Routenkriterium einen ersten Wert aufweisen, wenn ein Routenabschnitt als für den Elektroantrieb 111 geeignet eingestuft ist und einen zweiten Wert aufweisen, wenn ein Routenabschnitt als für den Kraftstoffantrieb 113 geeignet eingestuft ist. Das Steuergerät 115 kann über eine Schnittstelle Steuerdaten an den Elektroantrieb 111 und den Kraftstoffantrieb 113 oder an eine zwischengeschaltete Steuereinrichtung bereitstellen. Das Steuergerät 115 kann ausgebildet sein, um die Steuerdaten basierend auf der Datenbasis 117 und Informationen über einen gerade befahrenen oder zu befahrenen Routenabschnitt zu bestimmen. Das System kann eine Aktualisierungsvorrichtung 120 aufweisen, die ausgebildet ist, um Daten zur Aktualisierung der Datenbasen 117 an die Fahrzeuge 101, 102 und deren Steuergeräte 115 oder Datenbasen 117 zu übertragen. Ferner kann das Steuergerät 115 ausgebildet sein, um Daten an die Aktualisierungsvorrichtung 120 zu übertragen. Das Steuergerät 115 kann weitere Schnittstellen, beispielsweise zu einem GPS-Empfänger aufweisen, um eine Orts- und Fahrtrichtungsinformation zu erhalten. Das System kann weitere Fahrzeuge und weitere Aktualisierungsvorrichtungen umfassen. Das Steuergerät 115 kann Teil eines Navigationsgeräts sein. Die Datenbasis 117 kann in dem Steuergerät 115 integriert oder über eine Schnittstelle gekoppelt sein.

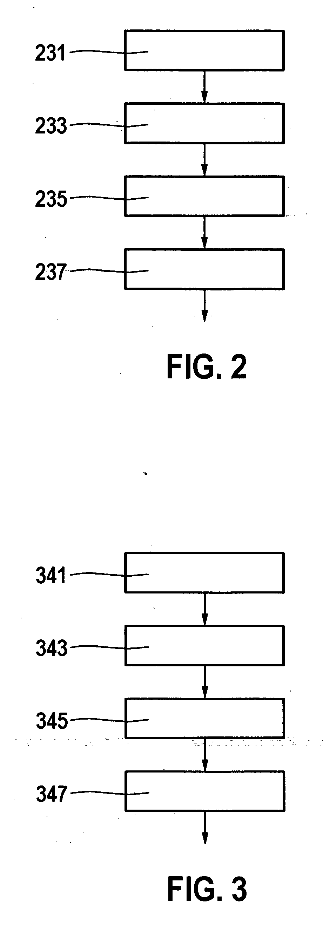

Fig. 2 zeigt ein Ablaufdiagramm eines Verfahrens zur Steuerung eines Hybridantriebs eines Fahrzeugs, gemäß einem Ausführungsbeispiel der vorliegenden Erfindung. Bei dem Fahrzeug kann es sich um eines der in Fig. 1 gezeigten Fahrzeuge mit einem Hybridantrieb und einem Steuergerät mit einer entsprechenden Datenbasis handeln. Die Datenbasis kann in einem Schritt 231 mit Initialwerten vorab bereitgestellt werden. Beispielsweise während der Fahrt kann in einem Schritt 233 eine aktuelle Routeninformation empfangen werden. Die Routeninformation kann beispielsweise von einem Navigationssystem bereitgestellt werden und eine von dem Fahrzeug befahrene oder zu befahrene Route anzeigen. In einem Schritt 235 kann ein der aktuelle Routeninformation entsprechendes aktuelles Routenkriterium aus der Datenbasis ausgelesen werden. Basierend auf dem aktuellen Routenkriterium in einem Schritt 237 bestimmt werden, ob die aktuelle Route mit Elektroantrieb oder mit Kraftstoffantrieb befahren werden soll. Eine entsprechende Steuerinformation kann an den Hybridantrieb bereitgestellt werden. Ansprechend auf die Steuerinformation kann entweder der Elektroantrieb oder der Kraftstoffantrieb aktiviert werden.

Nach der ursprünglichen Bereitstellung der Datenbasis können die Inhalte der Datenbasis fortlaufend aktualisiert werden. Dazu können entsprechende Aktualisierungsinformationen, beispielsweise von der in Fig. 1 gezeigten Aktualisierungsvorrichtung, empfangen werden. Die Aktualisierungsinformationen können auf Daten basieren, die von Fahrzeugen bereitgestellt werden. Dazu können Steuergeräte der Fahrzeuge fortlaufend aktuelle Bewegungsprofile der Fahrzeuge bewerten, um daraus zu ermitteln, welcher Antrieb für einen gerade befahrenen Routenabschnitt am geeignetsten ist. Entsprechende Informationen können, beispielsweise über eine Funkverbindung, an die Aktualisierungsvorrichtung übermittelt werden.

Der erfindungsgemäße Ansatz einer effizienten Steuerung des Hybridantriebes mittels Navigation basiert darauf, dass die unterschiedlichen Betriebsarten eines Hybridantriebes in verschiedenen-Fahrsituationen besonders effizient sind. Der Elektromotor eignet sich besonders gut für Situationen mit vielen Start- und Stopvorgängen und häufigen Beschleunigungs- und Bremsvorgängen, wie sie z.B. im Stadtverkehr auftreten. Der Kraftstoffantrieb eignet sich besonders gut für Strecken mit hohen Geschwindigkeiten, wie es z.B. auf der Autobahn der Fall ist.

Daher wird erfindungsgemäß ein neues Routenkriterium festgelegt, welches sowohl die Anzahl der Start- und Stop Vorgänge, die Beschleunigungs- und Bremsvorgänge als auch den Durchschnittsverbrauch berücksichtigt. Dieses Kriterium kann anhand von Durchschnittswerten für einen bestimmten Streckenabschnitt ermittelt werden, als auch dynamisch festgelegt werden. Das Routenkriterium kann mit einem initialen Wert direkt in den Kartendaten der Navigation hinterlegt werden.

Die Erfassung eines Durchschnittswertes für einen bestimmten Streckenabschnitt kann sowohl über das Aufnehmen von Vergleichswerten, z.B. über eine Testflotte, oder durch die Ermittlung über "dynamische Erfassung" erfasst werden.

Bei der Ermittlung über die Testflotte werden die erfassten Werte in den Fahrzeugen lokal gespeichert, z.B. in der Headunit, und werden am Ende der Erfassungsfahrt aus den Fahrzeugen ausgelesen. Aus den ausgelesenen Daten können Routenkriterien ermittelt werden und den Routenabschnitten zugeordnet werden.

Bei der "dynamische Erfassung" senden Fahrzeuge, die einen Streckenabschnitt Befahren, die oben erwähnte Daten über eine Kommunikationseinrichtung, die z.B. auf GSM oder WLAN basieren kann, an einen Server und an eine Datenbank, die die ermittelten Daten auswertet und über eine weitere Kommunikationseinrichtung an andere Fahrzeuge ausstrahlt. Das Ausstrahlen kann z.B. über GSM oder Rundfunk erfolgen. Diese Erfassung kann dazu genutzt werden das Routenkriterium dynamisch je nach Verkehrssituation auf dem befahrenen Abschnitt zu gestalten.

Entsteht z.B. ein Stau auf einer Autobahn, so wird der betroffene Routenabschnitt von der Betriebsart "Kraftstoff" auf "Elektrobetrieb umgeschaltet. Das Umschalten kann ansprechend auf eine Änderung des Routenkriteriums für den betroffenen Routenabschnitt erfolgen.

Fig. 3 zeigt ein Ablaufdiagramm eines Verfahrens zur Routenberechnung durch ein Navigationssystem, gemäß einem Ausführungsbeispiel der vorliegenden Erfindung. Dabei kann zunächst in einem Schritt 341 eine Datenbasis bereitgestellt werden, die neben den für die Routenberechnung erforderlichen Routen- oder Streckeninformationen Routenkriterien umfasst, die angeben, für welche Routenabschnitte sich der Elektroantrieb und für welche Routenabschnitte sich der Kraftstoffantrieb des Hybridantriebs eignet. In einem Schritt 343 können eine Startinformation und eine Zielinformation empfangen werden. Die Startinformation und die Zielinformation können von einem Benutzer des Navigationssystems eingegeben werden. Basierend auf der Startinformation und der Zielinformation sowie der Datenbasis kann in einem Schritt 345 ein Verlauf einer Route zwischen dem Start und dem Ziel bestimmt werden. Der Verlauf kann in einem Schritt 347 zur Weiterverarbeitung bereitgestellt werden und beispielsweise dem Benutzer angezeigt werden. Zum Bestimmen des Verlaufs können weiteres Kartenmaterial, weitere Routenoptionen und auch Zustandsdaten des Hybridantriebs verwendet werden. Durch das Berücksichtigen der Routenkriterien kann die Routenberechnung auf die Besonderheiten des Hybridantriebs zugeschnitten werden.

Die Routenberechnung kann vor Antritt einer Fahrt durchgeführt werden. Dass Routenkriterium kann derart berücksichtigt werden, dass die vorhandenen Energiereserven sowohl im Kraftstofftank als auch der Ladezustand der Batterie derart berücksichtigt wird, dass eine möglichst effiziente Nutzung der Energiequelle ermöglicht wird, als auch dass möglichst ohne Zwischenstop das Ziel erreicht wird. Muss doch ein Zwischenstop eingelegt werden, so wird dieser anhand von vorhandenen Tankstellen oder Energieladestationen in der Routenberechnung geplant und dem Fahrer über die Mensch-Maschine-Schnittstelle (HMI) vorgeschlagen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren zur Steuerung eines Hybridantriebs eines Fahrzeugs (101, 102), wobei der Hybridantrieb einen Elektroantrieb (111) und einen Kraftstoffantrieb (113) aufweist, und das die folgenden Schritte umfasst:
Bereitstellen (231) einer Datenbasis (117), die Zuordnungen zwischen Routeninformationen und ersten und zweiten Routenkriterien aufweist, wobei die Routeninformationen von dem Fahrzeug befahrbare Routen repräsentieren und das erste Routenkriterium einen bevorzugten Einsatz des Elektroantriebs auf der jeweils zugeordneten Route und das zweite Routenkriterium einen bevorzugten Einsatz des Kraftstoffantriebs auf der jeweils zugeordneten Route darstellt, wobei eine Route einer Routeninformation der das erste Routenkriterium zugeordnet ist, so eingestuft ist, dass es effizienter ist, die Route im Elektroantrieb zu befahren anstatt im Kraftstoffbetrieb, und wobei eine Route einer Routeninformation der das zweite Routenkriterium zugeordnet ist, so eingestuft ist, dass es effizienter ist, die Route im Kraftstoffbetrieb zu befahren anstatt im Elektroantrieb;
Empfangen (233) einer aktuellen Routeninformation über eine Schnittstelle, wobei die aktuelle Routeninformation eine von dem Fahrzeug befahrene oder zu befahrene Route repräsentiert;
Bestimmen (235) eines der aktuellen Routeninformation zugeordneten aktuellen Routenkriteriums, basierend auf der Datenbasis;
Bereitstellen (237) einer Steuerinformation zum Einsetzen des Elektroantriebs, wenn es sich bei dem aktuellen Routenkriterium um das erste Routenkriterium handelt oder zum Einsetzen des Kraftstoffantriebs, wenn es sich bei dem aktuellen Routenkriterium um das zweite Routenkriterium handelt; und
Empfangen einer Aktualisierungsinformation über eine Aktualisierungsschnittstelle, wobei die Aktualisierungsinformation zumindest für eine Routeninformation der Datenbasis (117) ein aktualisiertes Routenkriterium aufweist, bei dem es sich entweder um das erste oder das zweite Routenkriterium handelt, und mit einem Schritt des Aktualisierens der Datenbasis basierend auf der Aktualisierungsinformation, wobei die Aktualisierungsinformation eine Information repräsentiert, die von einer zentralen Aktualisierungsvorrichtung (120) oder einem weiteren Fahrzeug an eine Mehrzahl von Fahrzeugen bereitgestellt wird.

2. Verfahren gemäß Anspruch 1, bei dem die Datenbasis eine digitale Karte eines Navigationssystems repräsentiert.

3. Verfahren gemäß einem der vorangegangenen Ansprüche, mit einem Schritt des Bewertens eines aktuellen Bewegungsprofils des Fahrzeugs, um ein neues Routenkriterium für eine von dem Fahrzeug befahrene aktuelle Route zu bestimmen.

4. Verfahren gemäß Anspruch 3, bei dem eine Anzahl von Start- und Stop-Vorgängen, Beschleunigungs- und Bremsvorgänge und/oder ein Durchschnittsverbrauch des Fahrzeugs auf der aktuellen Route bewertet werden, um das neue Routenkriterium zu bestimmen.

5. Verfahren gemäß einem der Ansprüche 3 oder 4, mit einem Schritt des Bereitstellens des neuen Routenkriteriums an eine Sendeschnittstelle, so dass das neue Routenkriterium von der zentralen Aktualisierungsvorrichtung (120) als Grundlage für die Aktualisierungsinformation und/oder von anderen Fahrzeugen als Aktualisierungsinformation empfangen werden kann.

6. Steuergerät (115), das ausgebildet ist, um die Schritte eines Verfahrens gemäß einem der Ansprüche 1 bis 5 durchzuführen.

7. Computerprogrammprodukt mit Programmcode, der auf einem maschinenlesbaren Träger gespeichert ist, zur Durchführung des Verfahrens nach einem der Ansprüche 1 bis 5, wenn das Programm auf einem Steuergerät ausgeführt wird.

8. System zur Steuerung von Hybridantrieben einer Mehrzahl von Fahrzeugen (101, 102), wobei die Hybridantriebe einen Elektroantrieb (111) und einen Kraftstoffantrieb (113) aufweisen, mit folgenden Merkmalen:
die Mehrzahl von Fahrzeugen, wobei jedes der Fahrzeuge ein Steuergerät (115) gemäß Anspruch 6 aufweist; und
mindestens einer zentralen Aktualisierungsvorrichtung (120), die ausgebildet ist, um Aktualisierungsinformationen an die Mehrzahl von Fahrzeugen auszusenden, wobei die Aktualisierungsinformationen zumindest für eine Routeninformation der Datenbasen (117) der Steuergeräte ein aktualisiertes Routenkriterium aufweisen, bei dem es sich entweder um das erste oder das zweite Routenkriterium handelt.

## Claims

1. Method for controlling a hybrid drive of a vehicle (101, 102), wherein the hybrid drive has an electric drive (111) and a fuel-powered drive (113), and which comprises the following steps:
making available (231) a database (117) which has assignments between route information and first and second route criteria, wherein the route information represents routes which can be driven on by the vehicle, and the first route criterion constitutes a preferred use of the electric drive on the respectively assigned route, and the second route criterion constitutes a preferred use of the fuel-powered drive on the respectively assigned route, wherein a route of route information to which the first route criterion is assigned is categorized in such a way that it is more efficient to drive along the route with the electric drive instead of in the fuel-powered mode, and wherein a route of route information to which the second route criterion is assigned is categorized in such a way that it is more efficient to drive along the route in the fuel-powered mode instead of with the electric drive;
receiving (233) current route information via an interface, wherein the current route information represents a route which is being driven on or is to be driven on by the vehicle;
determining (235) a current route criterion which is assigned to the current route information, on the basis of the database;
making available (237) control information for using the electric drive, if the current route criterion is the first route criterion or for using the fuel-powered drive if the current route criterion is the second route criterion; and
receiving update information via an updating interface, wherein the update information has, at least for route information of the database (117), an updated route criterion which is either the first or the second route criterion, and having a step of updating the database on the basis of the update information, wherein the update information represents information which is made available to a multiplicity of vehicles by a central updating device (120) or a further vehicle.

2. Method according to Claim 1, in which the database represents a digital map of a navigation system.

3. Method according to one of the preceding claims, having a step of evaluating a current movement profile of the vehicle in order to determine a new route criterion for a current route which is being driven on by the vehicle.

4. Method according to Claim 3, in which a number of start processes and stop processes, acceleration processes and braking processes and/or an average consumption of the vehicle on the current route are evaluated in order to determine the new route criterion.

5. Method according to one of Claims 3 or 4, having a step of making available the new route criterion to a transmission interface, with the result that the new route criterion can be received from the central updating device (120) as a basis of the update information and/or from other vehicles as update information.

6. Control device (115) which is designed to carry out the steps of a method according to one of Claims 1 to 5.

7. Computer program product with program code which is stored on a machine-readable carrier, for carrying out the method according to one of Claims 1 to 5 when the program is executed on a control device.

8. System for controlling hybrid drives of a multiplicity of vehicles (101, 102), wherein the hybrid drives have an electric drive (111) and a fuel-powered drive (113), having the following features:
the multiplicity of vehicles, wherein each of the vehicles has a control device (115) according to Claim 6; and
at least one central updating device (120) which is designed to emit update information to the multiplicity of vehicles, wherein the update information has, at least for route information of the databases (117) of the control devices, an updated route criterion which is either the first or the second route criterion.

## Revendications

1. Procédé destiné à commander une motorisation hybride d'un véhicule (101, 102), la motorisation hybride comportant une motorisation électrique (111) et une motorisation par carburant (113) et qui comporte les étapes suivantes :
mise à disposition (231) d'une base de données (117), qui comporte des affectations entre des informations d'itinéraires et des premiers et des deuxièmes critères d'itinéraires, les informations d'itinéraires représentant des itinéraires susceptibles d'être empruntés par le véhicule et le premier critère d'itinéraire représentant une utilisation préconisée de la motorisation électrique sur l'itinéraire respectivement affecté et le deuxième critère d'itinéraire représentant une utilisation préconisée de la motorisation par carburant sur l'itinéraire respectivement affecté, un itinéraire d'une information d'itinéraire à laquelle est affecté le premier critère d'itinéraire étant classifié de telle sorte qu'il est plus efficace d'emprunter l'itinéraire avec la motorisation électrique plutôt qu'avec la motorisation par carburant et un itinéraire d'une information d'itinéraire à laquelle est affecté le deuxième critère d'itinéraire étant classifié de telle sorte qu'il est plus efficace d'emprunter l'itinéraire avec la motorisation par carburant, plutôt qu'avec la motorisation électrique ;
réception (233) d'une information d'itinéraire actuelle via une interface, l'information d'itinéraire actuelle représentant un itinéraire emprunté ou devant être emprunté par le véhicule ;
détermination (235) d'un critère actuel d'itinéraire affecté à l'information d'itinéraire actuelle, basé sur la base de données ;
mise à disposition (237) d'une information de commande pour l'utilisation de la motorisation électrique, si le critère actuel d'itinéraire est le premier critère d'itinéraire ou pour l'utilisation de la motorisation par carburant, si le critère actuel d'itinéraire est le deuxième critère d'itinéraire ; et
réception d'une information de mise à jour via une interface de mise à jour, l'information de mise à jour comportant au moins pour une information d'itinéraire de la base de données (117) un critère d'itinéraire mis à jour, pour lequel il s'agit soit du premier soit du deuxième critère d'itinéraire, et avec une étape de la mise à jour de la base de données basée sur l'information de mise à jour, l'information de mise à jour représentant une information qui est mise à disposition par un dispositif de mise à jour (120) centralisé ou par un autre véhicule à une pluralité de véhicules.

2. Procédé selon la revendication 1, lors duquel la base de données représente une carte numérique d'un système de navigation.

3. Procédé selon l'une quelconque des revendications précédentes, avec une étape d'évaluation d'un profil actuel de déplacement du véhicule, pour déterminer un nouveau critère d'itinéraire pour un itinéraire actuel emprunté par le véhicule.

4. Procédé selon la revendication 3, lors duquel un nombre de processus de démarrage et d'arrêt, de processus d'accélération et de freinage et/ou une consommation moyenne du véhicule sont évalués sur l'itinéraire actuel, pour déterminer le nouveau critère d'itinéraire.

5. Procédé selon l'une quelconque des revendications 3 ou 4, avec une étape de la mise à disposition du nouveau critère d'itinéraire à une interface d'émission, de sorte que le nouveau critère d'itinéraire puisse être réceptionné par le dispositif de mise à jour (120) centralisé, en tant que base pour l'information de mise à jour et/ou par d'autres véhicules, en tant qu'information de mise à jour.

6. Instrument de commande (115) qui est conçu pour réaliser les étapes d'un procédé selon l'une quelconque des revendications 1 à 5.

7. Produit de programme informatique avec un code programme qui est mémorisé sur un support lisible par machine pour la réalisation du procédé selon l'une quelconque des revendications 1 à 5, lorsque le programme est exécuté sur un instrument de commande.

8. Système destiné à commander des motorisations hybrides d'une pluralité de véhicules (101, 102), les motorisations hybrides comportant une motorisation électrique (111) et une motorisation par carburant (113), avec les caractéristiques suivantes :
la pluralité de véhicules, chacun des véhicules comportant un instrument de commande (115) selon la revendication 6 ; et
au moins un dispositif de mise à jour (120) centralisé qui est conçu pour émettre des informations de mise à jour destinées à la pluralité de véhicules, les informations de mise à jour comportant au moins pour une information d'itinéraire des bases de données (117) des instruments de commande un critère d'itinéraire mis à jour, pour lequel il s'agit soit du premier soit du deuxième critère d'itinéraire.
